# EUROPEAN PATENT SPECIFICATION

(11) **EP 1 069 321 B1**
(45) Date of publication and mention of the grant of the patent: **01.12.2004**
(21) Application number: 00305303.0
(22) Date of filing: 23.06.2000
(51) Int. Cl.: F15B 13/04, F15B 15/28

(54) **Directional control valve having position detecting function**
Wegeventil mit Positionsermittlung
Distributeur pneumatique avec détection de la position

(30) Priority: 12.07.1999 JP 19777799
(43) Date of publication of application: 17.01.2001
(73) Proprietor: SMC CORPORATION, Minato-ku, Tokyo (JP)
(72) Inventor: Hayashi, Bunya, c/o SMC Corporation Tsukuba, Tsukuba-gun, Ibaraki (JP); Ishikawa, Makoto, c/o SMC Corporation Tsukuba, Tsukuba-gun, Ibaraki (JP)
(74) Representative: Findlay, Alice Rosemary

(56) References cited:
- EP-A- 0 844 425
- WO-A-94/07037
- JP-U- 2 066 784
- US-A- 4 966 041
- US-A- 5 502 380

## Description

The present invention relates to a directional control valve having a position detecting function capable of detecting operating positions of a valve member such as a spool.

A directional control valve capable of detecting the changeover operation of a spool utilising a magnet is well known and is disclosed in, for example, Japanese Unexamined Utility Model Publication No. 2-66784. This known directional control valve is provided with a magnet on the outer periphery of a spool and a magnet sensor on a casing. This directional control valve is arranged so that, when the spool moves to one changeover position, the magnet approaches the magnetic sensor, and the magnetic sensor is turned on, and that, when the spool moves to the other changeover position, the magnet moves away from the magnetic sensor, and the magnetic sensor is turned off. Thus, this directional control valve detects that the spool has been changed over by the on/off of the magnetic sensor.

However, since in the above-described conventional directional control valve the magnetic sensor outputs the detection signal of "on" or "off" when the spool has arrived at a spool end, the directional control valve cannot detect intermediate positions of the spool along a stroke, even though it can detect the position of the spool at the stroke ends. Therefore, if the spool makes an irregular unsmooth movement due to some abnormality during a stroke, it is impossible to detect this abnormality. This has made it difficult to take suitable precautions against a failure or an accident before they happen, and so has presented problems for maintenance and management.

In addition, the magnetic sensor is generally arranged so as to be turned on when the magnetic flux density is above a fixed value, and to be turned off when it is below another fixed value. Therefore, during the driving stroke of the spool, if the magnetic flux density becomes higher than the fixed value due to the approach of a magnet, the magnetic sensor is turned on even before the spool arrives at a stroke end, and conversely, during the return stroke of the spool, if the magnetic flux density becomes lower than the other fixed value due to the moving-away of the magnet, the magnetic sensor is turned off even before the spool arrives at the return-stroke end. Therefore, even if the spool stops on the spot for some reason at the instant when the magnetic sensor is turned on or turned off, the magnetic sensor only outputs an on/off signal indicating that the spool has been completely changed over. Thus, any abnormality cannot be detected.

Furthermore, since the magnet is installed at a position on the outer periphery of the spool which is situated in the fluid passage, the magnet directly contacts a hydraulic fluid. Therefore, if the fluid contains water, chemical mist, particulates of magnetic material such as metallic powder, or the like, there will arise the problem that the contact of the magnet with these substances will make the magnet rust, corrode, or adsorb the particulates, thereby causing a reduction in detection accuracy due to a decrease in magnetic force, or causing a malfunction of the valve member due to adsorbed particles.

An object of the present invention is to provide a directional control valve having a position detecting function capable of detecting the operating positions of the valve member over the whole stroke thereof.

Another object of the present invention is to prevent the components of the position detecting means of a directional control valve from contacting hydraulic fluid to stop them being affected by the hydraulic fluid, and to maintain excellent detecting accuracy and operational stability.

EPA 0844425 describes a valve spool detection apparatus in which a shiftable valve spool has a plurality of distinct targets carried thereon. The targets are preferably axially spaced and located at one end of the valve spool. A detector mounted in the valve detects each target as each target enters a detection field of the detector. The detector generates a distinct output indicative of one target positioned within the detection field of the detector. A control determines, in response to the output from the detector, the exact valve spool position.

The present invention provides a directional control valve having a position detecting function, comprising a casing having a plurality of ports and a valve hole into which each of the ports is opened, a valve member for changing over fluid passages between the ports, the valve member being slidably received in the valve hole, driving means for driving said valve member comprising at least one piston for changing over the valve member under the action of a pilot fluid pressure, a chamber defined by the casing, the piston and the valve member, a detection head disposed in the chamber at a position shut off from the fluid passages and mounted on an end portion of the valve member on the same side as the piston such as to be movable in synchronisation with the valve member, and a magnetic sensor disposed at a position in the casing corresponding to the detection head, characterised in that the chamber in which the detection head is installed is a breathing chamber which is opened to the exterior, and in that the detection head comprises a cylindrical-column shaped substrate disposed coaxially with said valve member and having a magnetic scale of a length corresponding to the whole stroke of the valve member formed by alternate magnetic portions and non-magnetic portions on the outer surface thereof and the magnetic sensor being arranged to read the magnetic scale of the detection head.

In the directional control valve having the above-described features, since pulse-shaped detection signals are outputted from the magnetic sensor by reading the magnetic scale as the scale moves together with the valve member, the operating positions of the valve member over the whole stroke thereof can be detected from the signals. From the relationship between the operating position and the operating time, it is possible to discriminate whether the valve member has operated normally or not, and to take suitable precautions against a failure or an accident before they happen.

Since the detection head is disposed in a breathing chamber at an end portion of the valve member it is in at a position shut off from the fluid passages. Thereby the magnetic scale can be prevented from directly contacting the hydraulic fluid. Therefore, even if the hydraulic fluid contains water, chemical mist, particles of magnetic material such as metallic particles, or the like, there is no risk of the magnetic scale rusting, corroding, or adsorbing magnetic particulates. This prevents a reduction in function, or a malfunction of the valve member due to adsorbed particulates.

The sensor may be formed of a magnetic resistance element and arranged to output two analog signals different in phase from each other upon reading the magnetic scale. In addition, the casing may be provided with a signal processing circuit which includes an amplifying circuit for amplifying the signals from the sensor and a dividing circuit for dividing the amplified signals into a plurality of pulse signals which are then outputted.

The invention will now be further described by way of example with reference to the accompanying drawings in which:
Fig. 1 is a longitudinal sectional view of a first embodiment of the directional control valve in accordance with the present invention.
Fig. 2 is an enlarged view showing the main section of Fig. 1.
Fig. 3 is a longitudinal cross sectional view of the main section showing the detail of a method for coupling the spool and the detecting head.
Fig. 4 is a perspective view showing the spool in its entirety.
Fig. 5 is a longitudinal sectional view showing the main section of a second embodiment of the present invention.
Fig. 6 is a diagram showing detection signals from the magnetic sensor.
Fig. 7 is a diagram showing pulse signals obtained by dividing the amplified signal into a plurality of signals.

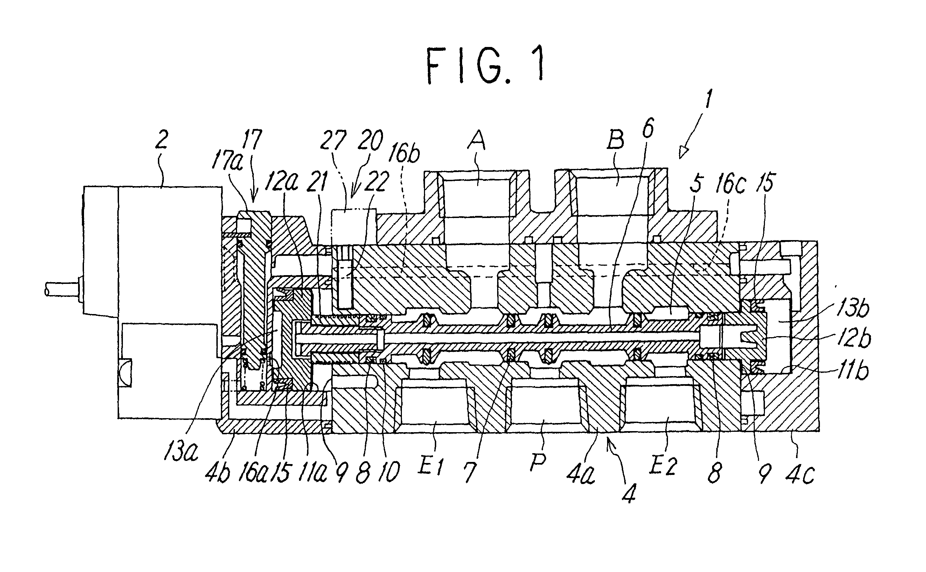

Fig. 1 shows the first embodiment of the directional control valve in accordance with the present invention. The directional control valve here exemplified is a single-pilot type directional control valve wherein a main valve 1 is changed over by one pilot valve 2.

The main valve 1 has a construction as a 5-port valve, and includes a casing 4 constructed of non-magnetic material. The casing 4 comprises a first member 4a of cuboid shape, a second member 4b which is connected to the one end of the first member 4a and which also serves as an adapter for mounting the pilot valve 2, and a third member 4c which is connected to the other end of the first member 4a and which functions as an end cover.

A supply port P and two discharge ports E1 and E2 are provided on either of the upper and lower surfaces of the first member 4a, and two output ports A and B are provided on the other surface. Inside the first member 4a, there is provided a valve hole 5 to which these ports are each opened being arranged in the axial direction. In the valve hole 5, there is slidably received a spool 6 which is a valve member for changing over flow passages.

On the outer periphery of the spool 6, there are provided a plurality of sealing members 7 for mutually defining flow passages connecting the above-mentioned ports, and on the outer peripheries of both ends of the spool 6, there are provided respective end sealing members 8 for shutting off the breathing chambers 9 facing the ends of the spool 6, from some flow passages. Reference numeral 10 in Fig. 1 denotes a guide ring for stabilizing the sliding of the spool 6.

On the other hand, in the second member 4b and the third member 4c, the piston chamber 11a and 11b are formed, respectively, at the positions facing both ends of the spool 6. A first piston chamber 11a formed in the second member 4b has a large diameter, and a first piston 12a of large diameter is slidably received in the piston chamber 11a, while a second piston chamber 11b formed in the third member 4c has a smaller diameter than the first piston chamber 11a, and a second piston 12b of small diameter is slidably received in the piston chamber 11b. Out of these pistons, the second piston 12b directly abuts against the end face of the spool 6, while the first piston 12a abuts against the end face of the spool 6 via the detection head 21 forming a part of a position detecting mechanism 20.

On the back sides of the pistons 12a and 12b, that is, on the sides opposite to the end faces of the pistons abutting against the spool 6, first and second pilot pressure chambers 13a and 13b are formed, respectively. Between the pistons 12a and 12b, and the end faces of the spool 6, there are formed breathing chambers 9 and 9 which are opened to the outside, respectively. The pressure chambers 13a and 13b are hermetically shut off from the breathing chambers 9 and 9 by piston packing 15 and 15 mounted on the outer peripheries of the piston 12a and 12b, respectively.

The first pressure chamber 13a situated adjacent to the first piston 12a of large diameter communicates with the supply port P through the pilot fluid passages 16a and 16b via the above-mentioned pilot valve 2 and a manual operating mechanism 17, while the second pressure chamber 13b situated adjacent to the second piston 12b of small diameter always communicates with the supply port P through the pilot fluid passage 16c.

When the pilot valve 2 is in the "off" state, that is, when the first pressure chamber 13a is not supplied with a pilot fluid, the second piston 12b is pushed by the pilot fluid pressure supplied to the second pressure chamber 13b, so that the spool 6 is situated at the first changeover position shifted to the left side, as shown in Fig. 1. Once the pilot valve 2 is turned "on", that is, the first pressure chamber 13a is supplied with a pilot fluid, the spool 6 is pushed by the first piston 12a, so that the spool 6 moves to the right side and occupies the second changeover position. This is because the acting force of fluid pressure acting on the first piston 12a is larger than that acting on the second piston 12b due to the difference in the pressure receiving area between the two piston 12a and 12b.

The above-mentioned manual operating mechanism 17 is adapted to directly connect the pilot fluid passages 16a and 16b by depressing an operating element 17a, and to thereby make the first pressure chamber 13a communicate with the supply port P. This operating state is the same as that in which the pilot valve 2 is"on".

The pilot valve 2 is an electromagnetically operated solenoid valve for opening/closing a pilot fluid passage by energizing a solenoid. Since its constitution and operation are the same as the known one, specific explanation thereof is omitted.

The above-described directional control valve is provided with the above-mentioned position detecting mechanism 20 for detecting operating positions of the spool 6. The position detecting mechanism 20 comprises a detection head 21 mounted on the spool 6 and a magnetic sensor 22 which is fixedly installed at a predetermined position adjacent to the casing 4 and which reads the magnetic scale on the detection head 21.

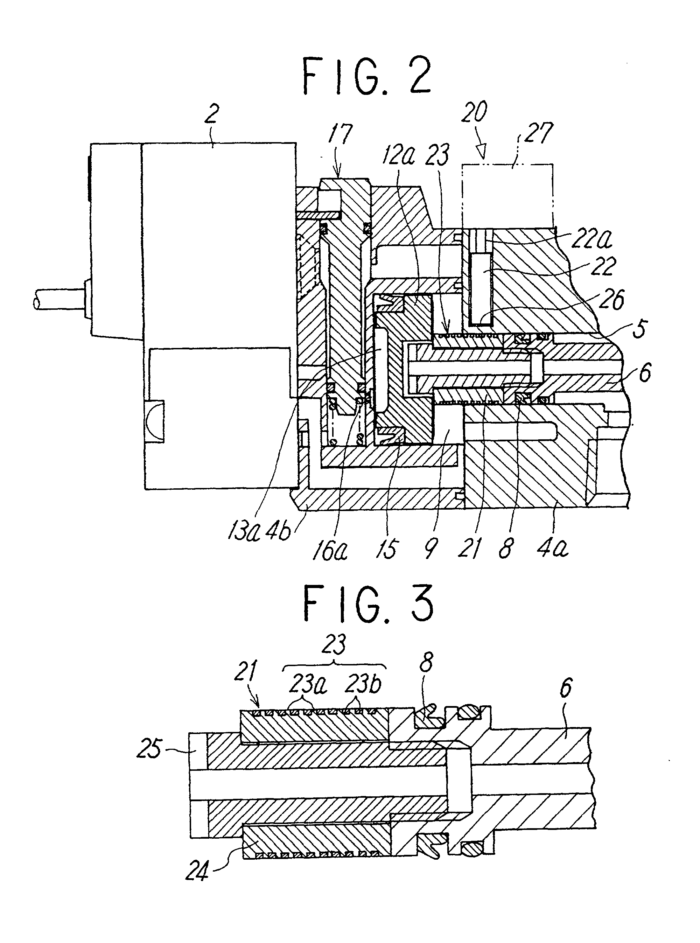

As shown in Figs. 2 through 4, the detection head 21 has the magnetic scale 23 which alternately disposes magnetic portions 23a and non-magnetic portions 23b at a constant pitch (i.e., 0.8 mm pitch) in the axial direction, on the outer surface of a substrate 24 of a cylindrical column shape having a small diameter slightly smaller than or equal to that of the end portion of the spool 6, and is installed, with the aid of a plug 25 inserted into the detection head, at a position which faces the breathing chamber 9 and which is situated on an end of said valve member so as to be coaxial with the spool 6.

In order to form the magnetic scale 23, magnetic bodies may be imbedded at a regular interval in the outer surface of the substrate 24 formed of non-magnetic material, or conversely, non-magnetic bodies may be imbedded at a regular interval in the outer surface of the substrate 24 formed of magnetic material. When imbedding the magnetic bodies or the non-magnetic bodies, as shown in drawings, annular bodies may be imbedded so as to surround the whole circumference of the substrate 24, or short-line shaped bodies may be partially imbedded in necessary area only out of all outer surface substrate 24.

Thus, by disposing the detection head 21 at a position facing the breathing chamber 9, shut off from the hydraulic fluid passages by the end sealing member 8, the magnetic scale 23 is prevented from contacting the hydraulic fluid. Therefore, even if the hydraulic fluid contains water, chemical mist, magnetic particles such as metallic powder, or the like, there is no risk of the magnetic scale 23 rusting, corroding, or adsorbing magnetic bodies due to the contact with these substances. This prevents the reduction in detecting accuracy due to the decrease in magnetic force, or the occurrence of a malfunction of the spool 6 due to adsorbed particulates.

On the other hand, the magnetic sensor 22 is installed at a position adjacent to the magnetic scale 23, in the housing 26 formed in the first member 4a of the casing 4, so as to be able to detect the magnetic scale 23 on the detection head 21 over the whole stroke of the spool 6. In this case, by opening the tip end of the housing 26 to the valve hole 5 at the position adjacent to the breathing chamber 9, more exterior than the end sealing member 8, the magnetic sensor 22 may be made to directly face to the magnetic scale 23. Even when the housing 26 is thus opened to the valve hole 5 at the position communicating with the breathing chamber 9, there is no risk of the hydraulic fluid leaking.

As the magnetic sensor 22, a magnetic resistance element that is changed in electric resistance by magnetic force is suitably utilized. This magnetic sensor is connected to a signal processing circuit 27 with a lead wire 22a. The signal processing circuit 27 comprises an amplifying circuit for amplifying the read signals from the magnetic sensor 22 and a dividing circuit for dividing an amplified signal into a plurality of signals to be outputted, and detects positions of the spool on the principle as follows. Here, the signal processing circuit 27 may be installed at any suitable position on a casing 4, as shown in drawings.

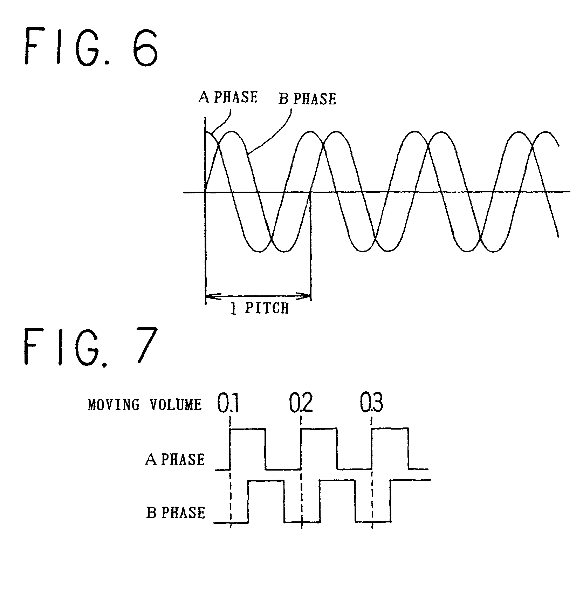

Once the magnetic sensor 22 reads the magnetic scale 23 moving together with the spool 6, the magnetic sensor 22 outputs a two-phase signal consisting of A and B phases having sin/cos waveforms as shown in Fig. 6. A cycle of these waveforms corresponds to one pitch of the magnetic scale.

After being sent to the signal processing circuit and amplified by the amplifying circuit, the above-described signal is divided into a plurality of signals, and pulse signals as shown in Fig. 7 is outputted toward a controller (not shown). By counting these pulses by a counter, the operating position of the spool can be detected.

For example, in the case where the magnetic scale 23 is marked at pitches of 0.8 mm, if a signal from the magnetic sensor 22 is amplified and then divided into eight, a pulse signal (0.1 mm/pulse) having a phase difference 90 is outputted, and consequently, the position of the spool can be detected with a resolution of 0.1 mm. Furthermore, if a signal is divided twenty, the position of the spool can be detected with a high resolution of 0.04 mm.

Therefore, by previously inputting data necessary for automatic control or maintenance, such as the relations between the operating position and the operating time when the spool 6 normally operates, and by comparing the detected results with these data, it is possible to discriminate whether the operation of the spool 6 has been normal or abnormal. This permits the prediction of a sign of failure, and taking precautionary measures against a failure before it happens. Thereby an situation such that the operation of device stops for a long time due to the occurrence of a failure or an accident can be prevented.

Herein, the operating positions, the operating times, etc. which have been detected for the piston 12a can be displayed on a display device in form of numeral values or graphs.

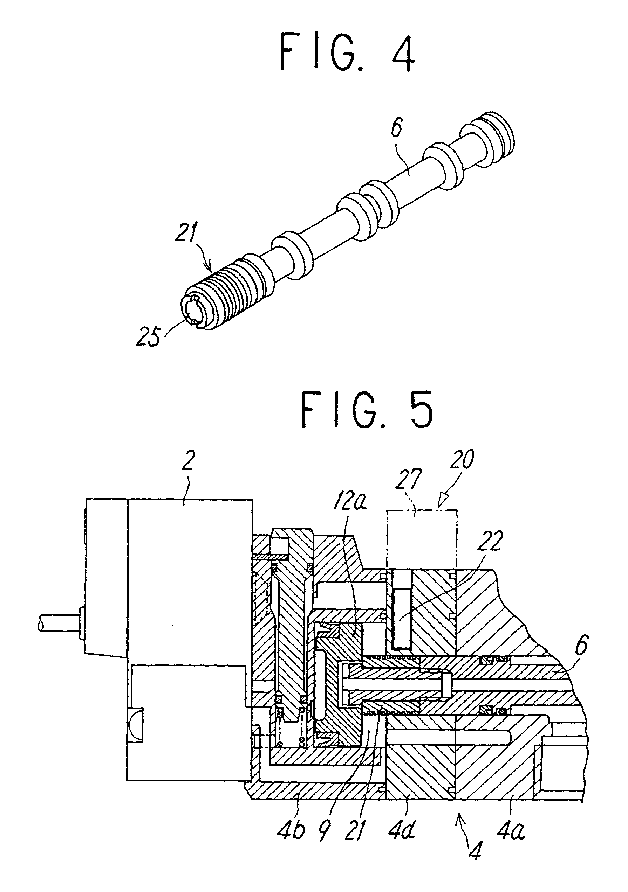

Fig. 5 shows the second embodiment of the present invention. The difference between the above-described first embodiment and the second embodiment is that in the first embodiment the magnetic sensor 22 is directly installed on the first member 4a of the casing 4, whereas in the second embodiment the forth member 4d dedicated to sensor mounting is interposed between the first member 4a and the second member 4b, and the magnetic sensor 22 is installed on this forth member 4d.

Since constitutions and operations of the second embodiment other than the foregoing are substantially the same as those of the first embodiment, description thereof is omitted.

In each of the above-described embodiments, as the valve member, a spool was shown, but the valve member is not limited to a spool. For example, even if the valve member is of poppet type, the present invention may be applied to it if it has, on at least one end side, a sliding portion for sliding in the valve hole and a breathing chamber and, on the sliding portion, an end sealing member for shutting off the breathing chamber from the flow passages.

Furthermore, the type of the directional control valve is not particularly limited to the single-pilot type as in the above-described embodiments, but a double-pilot type directional control valve may be used, or a direct-acting type directional control valve in which the valve member is directly driven by electromagnetic or mechanical driving means may be employed.

As has been described hereinbefore in detail, in accordance with the present invention, by disposing a magnetic scale which is displaced in synchronization with the valve member, and a magnetic sensor for reading the magnetic scale, it is possible to detect the operating positions over the whole stroke.

Moreover, in accordance with the present invention, by disposing the magnetic scale at a position shut off from the hydraulic fluid passages, the magnetic scale can be prevented from contacting the hydraulic fluid. Therefore, even if the hydraulic fluid contains water, chemical mist, magnetic particles such as metallic powders, or the like, the magnetic scale can be prevented from rusting, corroding, or adsorbing magnetic particles, which permits the maintaining of an excellent detecting accuracy and operational stability.

## Claims

1. A directional control valve having a position detecting function, comprising a casing (4) having a plurality of ports (P, E1, E2, A, B) and a valve hole (5) into which each of the ports is opened, a valve member (6) for changing over fluid passages between the ports, the valve member (6) being slidably received in the valve hole (5), driving means for driving said valve member comprising at least one piston (12a) for changing over the valve member under the action of a pilot fluid pressure, a chamber (9) defined by the casing (4), the piston (12a) and the valve member (6), a detection head (21) disposed in the chamber (9) at a position shut off from the fluid passages and mounted on an end portion of the valve member (6) on the same side as the piston (12a) such as to be movable in synchronisation with the valve member, and a magnetic sensor (22) disposed at a position in the casing (4) corresponding to the detection head (21), **characterised in that** the chamber in which the detection head (21) is installed is a breathing chamber (9) which is opened to the exterior, and **in that** the detection head (21) comprises a cylindrical-column shaped substrate (24) disposed coaxially with said valve member (6) and having a magnetic scale (23) of a length corresponding to the whole stroke of the valve member formed by alternate magnetic portions (23a) and non-magnetic portions (23b) on the outer surface thereof and the magnetic sensor (22) being arranged to read the magnetic scale of the detection head.

2. A directional control valve as claimed in Claim 1, wherein the detection head (21) is fixed to the spool (6) by a plug (25) passing through into the substrate (24).

3. A directional control valve as claimed in either Claim 1 or Claim 2, wherein the sensor (22) is formed of a magnetic resistance element, the sensor being arranged so as to output two analog signals different in phase from each other, upon reading the magnetic scale(23), and wherein the casing (4) is provided with a signal processing circuit (27) which comprises an amplifying circuit for amplifying the signals from the sensor (22) and a dividing circuit for dividing the amplified signals into a plurality of output pulse signals.

## Patentansprüche

1. Wegeventil mit Positionsermittlungsfunktion, umfassend ein Ventilgehäuse (4) mit mehreren Anschlüssen (P, E1, E2, A, B) und einer Ventilbohrung (5), in die all diese Anschlüsse münden, ein Ventilglied (6) zum Öffnen und Sperren der Durchflusskanäle zwischen den Anschlüssen, wobei das Ventilglied (6) verschiebbar in der Ventilbohrung (5) gelagert ist, Antriebsmittel zum Antrieb des Ventilglieds, das mindestens einen Steuerkolben (12a) umfasst, um das Ventilglied unter der Wirkung des Pilotdrucks eines Fluids zu verschieben, eine vom Ventilgehäuse (4), vom Steuerkolben (12a) und vom Ventilglied (6) definierte Kammer (9), einen Sensorkopf (21), der in der Kammer (9) an einer Stelle angeordnet ist, die von den Durchflusskanälen abgesperrt ist und an einem Endstück des Ventilglieds (6) auf der selben Seite wie der Steuerkolben (12a) angebracht ist, so dass er sich synchron mit dem Ventilglied bewegen kann, und einen Magnetsensor (22), der an einer zum Sensorkopf (21) passenden Stelle des Ventilgehäuses (4) angebracht ist, **dadurch gekennzeichnet, dass** die Kammer (9), in der der Sensorkopf (21) angebracht ist, eine Beund Entlüftungskammer (9) mit einer Öffnung ins Freie ist, und dass der Sensorkopf (21) ein zylindrisch-säulenförmiges Trägerelement (24) umfasst, das koaxial zum Ventilglied (6) angeordnet ist und ein Magnetband (23) mit einer dem Gesamthub des Ventilglieds entsprechenden Länge aufweist, das von magnetischen Elementen (23a) und nicht magnetischen Elementen (23b) gebildet wird, die abwechselnd auf dessen Außenfläche angeordnet sind, und wobei der Magnetsensor (22) so angeordnet ist, dass er das Magnetband des Sensorkopfs abtastet.

2. Wegeventil nach Anspruch 1, **dadurch gekennzeichnet, dass** der Sensorkopf (21) mit einem Stecker (25) am Kolbenschieber (6) befestigt ist, der in das Trägerelement (24) eingeführt wird.

3. Wegeventil nach Anspruch 1 oder nach Anspruch 2, **dadurch gekennzeichnet, dass** der Sensor (22) aus einem magnetischen Widerstandselement gebildet wird, wobei der Sensor so angeordnet ist, dass er nach dem Abtasten des Magnetbands (23) zwei analoge, zueinander phasenverschobene Signale ausgibt, und wobei das Gehäuse (4) mit einer Signalverarbeitungsschaltung (27) versehen ist, die eine Verstärkerschaltung zur Verstärkung der vom Sensor (22) kommenden Signale und eine Teilerschaltung zur Teilung der verstärkten Signale in mehrere Ausgangs-Impulssignale beinhaltet.

## Revendications

1. Soupape de réglage directionnelle possédant une fonction de détection de position, comprenant un boîtier (4) ayant une pluralité de ports (P, E1, E2, A, B) et un trou de soupape (5) dans lequel chacun des ports est ouvert, un élément de soupape (6) en vue de changer les passages de fluide entre les ports, l'élément de soupape (6) étant reçu de manière coulissante dans le trou de soupape (5), un moyen d'entraînement en vue d'entraîner ledit élément de soupape comprenant au moins un piston (12a) en vue de changer l'élément de soupape sous l'action d'une pression de fluide pilote, une chambre (9) définie par le boîtier (4), le piston (12a) et l'élément de soupape (6), une tête de détection (21) disposée dans la chambre (9) à une position isolée des passages de fluide et montée sur une portion d'extrémité de l'élément de soupape (6) sur le même côté que le piston (12a) de manière à être déplaçable en synchronisation avec l'élément de soupape, et un capteur magnétique (22) disposé à une position dans le boîtier (4) correspondant à la tête de détection (21), **caractérisée en ce que** la chambre dans laquelle la tête de détection (21) est installée est une chambre de respiration (9) qui est ouverte vers l'extérieur, et **en ce que** la tête de détection (21) comprend un substrat en forme de colonne cylindrique (24) disposé de manière coaxiale avec ledit élément de soupape (6) et possédant une échelle magnétique (23) d'une longueur correspondant à la course entière de l'élément de soupape formée par des portions magnétiques (23a) et des portions non magnétiques (23b) alternatives sur la surface extérieure de celle-ci et le capteur magnétique (22) étant agencé pour lire l'échelle magnétique de la tête de détection.

2. Soupape de réglage directionnelle selon la revendication 1, dans laquelle la tête de détection (21) est fixée à la bague (6) par une cheville (25) passant à travers dans le substrat (24).

3. Soupape de réglage directionnelle selon la revendication 1 ou la revendication 2, dans laquelle le capteur (22) est formé d'un élément à résistance magnétique, le capteur étant agencé de manière à produire deux signaux analogiques de phase différente l'un de l'autre, lors de la lecture de l'échelle magnétique (23), et dans laquelle le boîtier (4) est pourvu d'un circuit de traitement de signaux (27) qui comprend un circuit amplificateur en vue d'amplifier les signaux provenant du capteur (22) et un circuit diviseur en vue de diviser les signaux amplifiés en une pluralité de signaux à impulsions de sortie.
